# EUROPÄISCHE PATENTSCHRIFT

(11) **EP 0 406 546 B1**
(45) Veröffentlichungstag und Bekanntmachung des Hinweises auf die Patenterteilung: **22.09.1993**
(21) Anmeldenummer: 90109110.8
(22) Anmeldetag: 15.05.1990
(51) Int. Cl.: F02M 31/135

(54) **Ansaugsystem für eine gemischverdichtende Brennkraftmaschine**
Intake system for a mixture compressing internal combustion engine
Système d'admission pour un moteur à combustion interne à compression de mélange

(30) Priorität: 01.07.1989 DE 3921739
(43) Veröffentlichungstag der Anmeldung: 09.01.1991
(73) Patentinhaber: DAIMLER-BENZ AKTIENGESELLSCHAFT, 70327 Stuttgart (DE)
(72) Erfinder: Scherenberg, Dieter, Dr., D-7000 Stuttgart 75 (DE)

(56) Entgegenhaltungen:
- EP-A- 2 340 52
- DE-A- 2 309 954
- DE-A- 3 228 930
- FR-A- 1 404 104
- GB-A- 2 037 894
- US-A- 4 345 569
- PATENT ABSTRACTS OF JAPAN vol. 5, no. 22 (M-54)(694) 10 Februar 1981, & JP-A-55 151151 (NIPPON JIDOSHA BUHIN SOGO KENKYUSHO K.K.) 25 November 1980,

## Beschreibung

Die Erfindung betrifft eine gemischverdichtende Brennkraftmaschine mit einem Ansaugsystem gemäß den im Oberbegriff des Patentanspruchs 1 angegebenen Merkmalen.

Durch die Anordnung eines Heizelementes stromab einer in den Ansaugkanal spritzenden Kraftstoffeinspritzdüse wird bekanntlich eine Verbesserung der Gemischbildung mit der vorbeiströmenden Ansaugluft sowie eine Verminderung der HC- und C0-Emission erreicht. Aus den JP-Abstracts 55-15 11 51 (Appl.-No. 54-58 541) ist ein derartiges Ansaugsystem beschrieben, bei dem der von der Kraftstoffeinspritzdüse abgespritzte Kraftstoff durch das bei niedrigen Kühlwassertemperaturen wirksame Heizelement geleitet wird und verdampft. Der verdampfte Kraftstoff wird der im Ansaugkanal vorbeiströmenden Verbrennungsluft zugemischt und somit als erwärmtes Kraftstoff-Luft-Gemisch dem entsprechenden Brennraum im Zylinder zugeführt.

Der Erfindung liegt die Aufgabe zugrunde, ausgehend von dem vorerwähnten Ansaugsystem durch weitere Maßnahmen eine Leistungsverbesserung im Vollastbetrieb zu erreichen.

Zur Lösung der Aufgabe dienen die Merkmale, von Anspruch 1.

Durch die drehbare Lagerung des Heizelementes, das lediglich bei bestimmten niedrigen Kühlwassertemperaturen seinen Zweck zu erfüllen braucht, entstehen durch die Stellung in Strömungsrichtung keine Druckverluste im Ansaugkanal und damit auch keine Leistungsverluste bei Vollast, da das Heizelement eine Verlängerung der in den Ansaugkanal hineinragenden Trennwand bildet.

Aus der DE-A-2 309 954 ist ein Ansaugsystem mit einem Heizelement bekannt, das zwar auch drehbar gelagert ist und bei nicht benötigter Beheizung in eine einer geöffneten Drosselklappe entsprechende Ruhelage verdrehbar ist, jedoch im Strömungsweg des vorbeiströmenden Kraftstoff-Luft-Gemisches liegt und somit einen unerwünschten Strömungswiderstand insbesondere bei hohen Strömungsgeschwindigkeiten ergibt.

In den Unteransprüchen sind vorteilhafte Weiterbildungen der Erfindung angegeben.

In der Zeichnung ist der Gegenstand der Erfindung gezeigt und im folgenden näher beschrieben. Es zeigen:
- Fig. 1: den Ansaugkanal mit Heizelement im Schnitt
- Fig. 2: einen Schnitt durch den Ansaugkanal nach der Linie II-II in Fig. 1.

Im Ansaugkanal 1 einer gemischverdichtenden Brennkraftmaschine mit vier Ventilen pro Zylinder ist zwischen den Einlaßventilen 2,3 und einer Kraftstoffeinspritzdüse 4 ein elektrisches Heizelement 5 angeordnet, das als gitterförmiger oder wabenförmiger Flachkörper drehbar gelagert ist. Das Heizelement 5 besteht aus einem elektrischen Widerstandsmaterial mit positivem Widerstands-Temperatur-Koeffizient, dessen Heizleistung in Abhängigkeit von Betriebsparametern der Brennkraftmaschine, wie Drehzahl, Last und/oder Kühlwassertemperatur steuerbar ist.

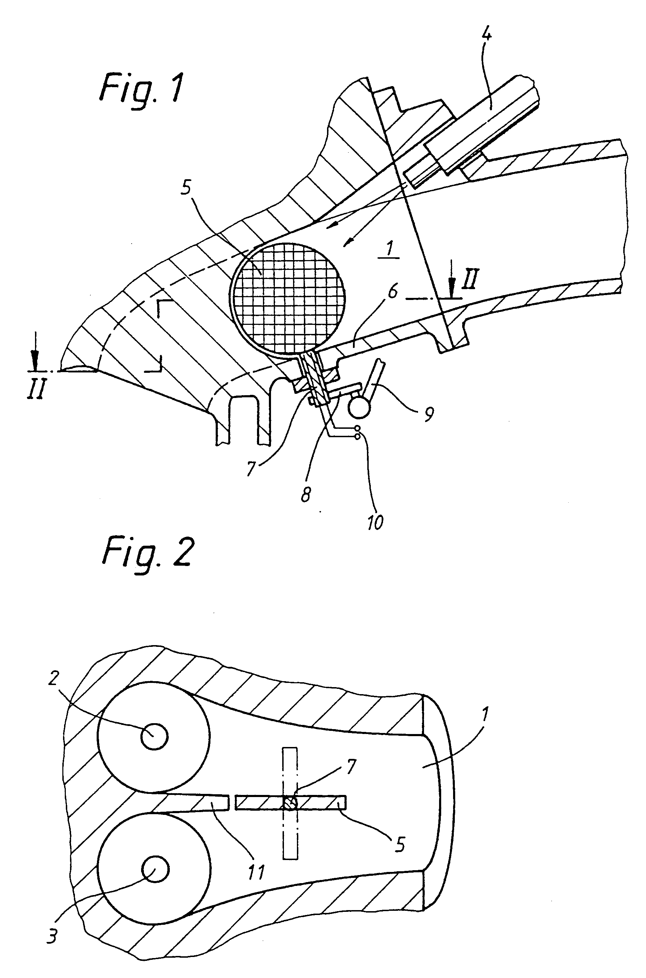

Das Heizelement 5 ist einseitig gelagert, und zwar durch eine in der Wand 6 des Ansaugkanals 1 geführte Heizelementwelle 7, die an ihrem außenliegenden freien Ende mit einem kurbelartigen Stellhebel 8 fest verbunden ist, an dem eine Verstellstange 9 angelenkt ist, die mehrere Stellhebel in einer Zylinderreihe verbindet. Die Verstellstange 9 kann pneumatisch über eine Membrandose, elektromagnetisch oder hydraulisch betätigt bzw. verstellt werden. Die elektrische Kontaktierung 10 erfolgt über die Welle 7. Das Heizelement 5 ist unterhalb einer bestimmten Kühlwassertemperatur im Strömungswege des Ansaugkanals 1 quergestellt und beheizt, (siehe gestrichelte Position in Fig. 2). Bei dieser Stellung wird das Heizelement 5 von den Kraftstoffstrahlen benetzt und von der Luftströmung vollständig beaufschlagt. Bei Überschreiten einer bestimmten oberen Kühlwassertemperatur ist das Heizelement 5 in Strömungsrichtung des Gemisches verdreht und unbeheizt ( Fig. 1 und 2). Die Anordnung des Heizelementes 5 sowie dessen Lagerung im Ansaugkanal 1 ist dabei so getroffen, daß das Heizelement 5 bei Nichtgebrauchslage bzw. Ruhelage eine Verlängerung einer zwischen den Einlaßventilen 2,3 verlaufenden und in den Ansaugkanal 1 hineinragenden Trennwand 11 darstellt. Der Stellwinkel des Heizelementes 5 kann last- und drehzahlabhängig gesteuert werden und die Heizleistung kann in Abhängigkeit vom Stellwinkel und der Kühlwassertemperatur erfolgen. Durch eine derartige Einflußnahme auf den Stellwinkel des Heizelementes 5 wird eine optimale Gemischbildung im gesamten Betriebsbereich der Brennkraftmaschine erreicht.

Die Funktionen des Heizelementes 5 sind auch bei Anwendung von zwei Einspritzdüsen pro Zylinder erfüllt.

## Patentansprüche

1. Gemischverdichtende Brennkraftmaschine mit einem Ansaugsystem und mindestens einem Einlaßventil (2,3) pro Zylinder, mit einem im Ansaugkanal (1) stromab einer in diesen spritzenden Kraftstoffeinspritzdüse (4) und quer zur Strömungsrichtung angeordneten elektrisch beheizbaren flach ausgebildeten Heizelement (5) zum Erwärmen des Kraftstoff-Luft-Gemisches,
**dadurch gekennzeichnet,**
daß die Brennkraftmaschine zwei Einlaßventile pro Zylinder aufweist, daß das drehbar ausgebildete Heizelement (5) aus seiner quergestellten Arbeitslage in eine in Strömungsrichtung liegende Ruhelage oberhalb einer bestimmten Kühlwassertemperatur überführbar ist und in dieser Ruhelage eine Verlängerung einer zwischen den Einlaßventilen (2,3) verlaufenden und in den Ansaugkanal (1) hineinragenden Trennwand (11) bildet.

2. Brennkraftmaschine nach Anspruch 1,
**dadurch gekennzeichnet,**
daß das Heizelement (5) mit einer Welle (7) versehen ist, die in der Wand des Ansaugkanals (1) einseitig gelagert ist und in der die elektrische Kontaktierung (10) vorgesehen ist.

3. Brennkraftmaschine nach Anspruch 2,
**dadurch gekennzeichnet,**
daß die Welle am freien Ende einen kurbelartigen Stellhebel (8) aufweist, an dem eine last- und drehzahlabhängige steuerbare Verstellstange (9) angelenkt ist.

4. Brennkraftmaschine nach einem der vorhergehenden Ansprüche,
**dadurch gekennzeichnet,**
daß die Zuführung von Heizleistung in Abhängigkeit von der Kühlwassertemperatur vorgesehen ist.

## Claims

1. Mixture-compressing internal-combustion engine with an intake system and at least one inlet valve (2,3) per cylinder, having an electrically heatable heating element (5) of flat form which is arranged in the intake channel (1) downstream of a fuel-injection nozzle (4) injecting into the latter and transversely relative to the direction of flow and which is intended for heating the fuel/air mixture, characterised in that the internal-combustion engine has two inlet valves per cylinder, in that the rotatably designed heating element (5) can be transferred from its transverse working position into a position of rest lying in the direction of flow and, in this position of rest, constitutes a prolongation of a partition wall (11) extending between the inlet valves (2,3) and projecting into the intake channel (1).

2. Internal-combustion engine according to Claim 1, characterized in that the heating element (5) is equipped with a shaft (7) which is mounted on one side in the wall of the intake channel (1) and in which the electrical contacting (10) is provided.

3. Internal-combustion engine according to Claim 2, characterized in that the shaft possesses, at the free end, a crank-like actuating lever (8), on which an adjusting rod (9) controllable as a function of the load and speed is articulated.

4. Internal-combustion engine according to one of the preceding claims, characterized in that heating capacity is supplied as a function of the cooling-water temperature.

## Revendications

1. Moteur à combustion interne à compression du mélange, comprenant un système d'admission et au moins une soupape d'admission (2, 3) par cylindre, un injecteur de carburant (4) qui injecte dans la tubulure d'admission (1) et, en aval de cet injecteur dans la tubulure d'admission (1), un élément chauffant (5) de forme plate, pouvant être chauffé électriquement et orienté transversalement au sens de l'écoulement, qui est destiné à échauffer le mélange air-carburant,
caractérisé en ce que
le moteur à combustion interne possède deux soupapes d'admission par cylindre et que l'élément chauffant (5), agencé pour être rotatif, peut être amené, au-dessus d'une température déterminée de l'eau de refroidissement, de sa position de travail où il est orienté transversalement, à une position de repos où il est orienté dans le sens de l'écoulement, et forme dans cette position de repos un prolongement d'une cloison (11) s'étendant entre les soupapes d'admission (2, 3) et faisant saillie dans la tubulure d'admission (1).

2. Moteur à combustion interne selon la revendication 1, caractérisé en ce que l'élément chauffant (5) est pourvu d'un axe (7) monté rotatif unilatéralement dans la paroi de la tubulure d'admission (1) et dans lequel est prévu le raccordement électrique (10).

3. Moteur à combustion interne selon la revendication 2, caractérisé en ce que l'axe porte à son extrémité libre un levier de positionnement (8) semblable à une manivelle, sur lequel est articulée une tige de manoeuvre (9) commandée en fonction de la charge et de la vitesse de rotation.

4. Moteur à combustion interne selon une des revendications précédentes, caractérisé en ce que l'amenée de puissance de chauffage s'effectue en fonction de la température de l'eau de refroidissement.
